(19) Europäisches Patentamt
European Patent Office
Office européen des brevets

(11) **EP 3 902 217 B1**

(12) **EUROPEAN PATENT SPECIFICATION**

(45) Date of publication and mention
of the grant of the patent:
**20.12.2023  Bulletin 2023/51**

(21) Application number: **19906824.8**

(22) Date of filing: **30.12.2019**

(51) International Patent Classification (IPC):
**H04L 47/31** *(2022.01)*

(52) Cooperative Patent Classification (CPC):
**H04L 47/31**

(86) International application number:
**PCT/CN2019/130001**

(87) International publication number:
**WO 2020/140875 (09.07.2020 Gazette 2020/28)**

(54) **MESSAGE PROCESSING METHOD AND APPARATUS**

NACHRICHTENVERARBEITUNGSVERFAHREN UND -VORRICHTUNG

PROCÉDÉ ET APPAREIL DE TRAITEMENT DE MESSAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.01.2019  CN 201910005223**

(43) Date of publication of application:
**27.10.2021  Bulletin 2021/43**

(73) Proprietor: **Huawei Technologies Co., Ltd.
Shenzhen, Guangdong 518129 (CN)**

(72) Inventors:
• **LI, Guangpeng
Shenzhen, Guangdong 518129 (CN)**
• **YU, Delei
Shenzhen, Guangdong 518129 (CN)**
• **LIU, Bingyang
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
**CN-A- 108 173 780     US-A1- 2002 129 158
US-B2- 7 171 683**

**Description**

**TECHNICAL FIELD**

This application relates to the communications field, and more specifically, to a packet processing method and apparatus.

**BACKGROUND**

A deterministic network is to provide a data transmission service with a deterministic latency. In the deterministic network, a plurality of queues are set, at each outbound interface of a device that supports a deterministic network feature, and are responsible for buffering upstream packets that arrive within a corresponding scheduling cycle. In addition, at any moment, only one queue is used to send a packet and other queues are used to only receive upstream packets. Each upstream packet carries a "cycle" field. A value (which is denoted as X) of the field identifies a specific cycle in which an upstream device is sent.

In an actual network, there are cases in which an abnormal underlying latency may be caused. For example, the cases include: a queuing latency introduced by a buffered queue of a link-layer device/interface, and a latency change caused due to underlying transmission network path switching in an internet protocol + (internet protocol +, IP+) underlying transmission network scenario. The abnormal underlying latency may affect a service in the deterministic network. For example, it is assumed that three queues are set, at an outbound interface of a local device, to be used to send a packet of an upstream device. In a normal case, queues 1, 2, and 3 may be respectively used to buffer packets whose X = 4, X = 5, and X = 6 and that are sent by the upstream device. After the packet whose X = 4 is sent, the queue 1 may be used to buffer a packet whose X = 7. However, if a link latency between the upstream device and the local device is abnormal, and consequently the packet whose X = 4 and the packet whose X = 7 arrive at the local device at the same time, the local device does not learn how to process the packets or the local device may discard some packets. This may affect an uncertain upstream packet, and consequently quality of service cannot be ensured.

US 7,171,683 B2 discloses a method for authenticating packet communication traffic that includes receiving a data packet sent over a network from a source address to a destination address and reading from the packet a value of a field that is indicative of a number of hops traversed by the packet since having been sent from the source address. The authenticity of the source address is assessed responsive to the value.

US 2002/0129158 A1 discloses a method and apparatus for packet scheduling using a virtual time stamp for a high capacity combined input and output queued switching system. A network employs a virtual time reference system (VfRS) to generate packet virtual time stamps associated with each packet traversing the network. The VfRS includes edge conditioners located at the edge of the network that receive unregulated packet traffic and generate regulated packet traffic for a given flow. The edge conditioners also add a packet virtual time stamp to each incoming packet. Core routers within a network core reference the packet virtual time stamps to schedule packet flow. The core routers also update the packet virtual time stamps using virtual delays. The packet virtual time stamps are removed from the packets when the packets leave the network core through an edge conditioner.

**SUMMARY**

This application provides a packet processing method and apparatus, to avoid chain impact of an abnormal packet caused by an abnormal underlying latency on an uncertain target flow. The invention is set out as in the appended claims.

According to a first aspect, a packet processing method is provided. The method includes: receiving, by a first device, a first packet sent by a second device, where the first packet carries a first label, and the first label is determined based on a cycle in which the second device sends the first packet, wherein the cycle corresponds to a cycle value that is an integer initialized based on a clock of the second device and incremented by another integer each time a fixed time period has elapsed; determining, by the first device based on the first label and a second cycle of the first device, whether the first packet is a normal packet, wherein the first packet is determined to be normal when the latency of its transmission from the second device to the first device is within a specific range, wherein the second cycle is a cycle in which the first device receives the first packet, or is a cycle after a cycle in which the first device receives the first packet and before a first cycle; if determining that the first packet is a normal packet, determining, by the first device, a second packet based on the first packet, where the second packet carries a second label; and sending, by the first device, the second packet to a third device in the first cycle, where the second label is determined based on the first cycle.

In this application, the normal packet is a packet that does not affect reception of a packet other than the first packet, or is a packet that is sent when a latency variation is within a specific range. An abnormal packet, contrast to the normal packet, is a packet that affects reception of a packet other than the first packet, or is a packet that is sent when a latency variation exceeds a specific range.

Optionally, the first device may obtain the second packet by replacing the first label in the first packet with the second label.

Alternatively, the first device may obtain the second packet by adding the second label to the first packet. It should be understood that the second packet in this case carries both the first label and the second label.

Optionally, the first label indicates a cycle in which the first device sends the first packet. Correspondingly, the second label indicates the second cycle. In other words, a cycle value indicated by the first label is the cycle in which the first device sends the first packet, and a cycle value indicated by the second label is the first cycle.

Further, the first cycle or the cycle value indicated by the second label may be determined based on an adjustment value $\Delta$ that is of the first device and that corresponds to the second device. For example, the cycle value indicated by the second label = the cycle value indicated by the first label + $\Delta$.

According to the packet processing method in this application, a packet detection mechanism is provided, so that normal sending processing is performed when it is determined that a packet is a normal packet. This avoids chain impact of an abnormal packet caused by an abnormal underlying latency on an uncertain target flow, and helps improve quality of service.

In a possible implementation, a cycle value indicated by the first label is the cycle in which the second device sends the first packet; and the determining, by the first device based on the first label and a second cycle of the first device, whether the first packet is a normal packet includes: determining, by the first device, whether the cycle value indicated by the first label is within a first window, wherein the first window is updated according to the second cycle, where different cycles of the first device correspond to different first windows; and if the cycle value indicated by the first label is within the first window, determining, by the first device, that the first packet is a normal packet, or if the cycle value indicated by the first label is not within the first window, determining, by the first device, that the first packet is an abnormal packet.

In a possible implementation, the cycle value indicated by the second label is the first cycle; and the determining, by the first device based on the first label and a second cycle of the first device, whether the first packet is a normal packet includes: determining, by the first device, the second label based on the first label; determining, by the first device, whether the cycle value indicated by the second label is within a second window, wherein the second window is updated according to the second cycle, where different cycles of the first device correspond to different second windows; and if the cycle value indicated by the second label is within the second window, determining, by the first device, that the first packet is a normal packet, or if the cycle value indicated by the second label is not within the second window, determining, by the first device, that the first packet is an abnormal packet.

In a possible implementation, the first window is $[C1 - \Delta + S, C1 + (w - 1) * S - \Delta]$, where $\Delta$ represents an adjustment value corresponding to the second device, and the adjustment value is an integer and is used to determine the second label; C1 is an integer that represents the second cycle; $w \geq 3$, and w represents an integer; and S represents the another integer that is not zero.

In a possible implementation, the second window is $[C1 + S, C1 + (w - 1) * S]$, where C1 is an integer that represents the second cycle; $w \geq 3$, w represents an integer, and S represents the another integer that is not 0.

In a possible implementation, the method further includes: if determining that the first packet is an abnormal packet, performing, by the first device, abnormality handling on the first packet, where the abnormality handling includes discarding the first packet or performing rescheduling processing on the first packet.

According to the packet processing method provided in this application, rescheduling processing is performed on the abnormal packet instead of simply being discarded. In this way, a retransmission latency caused due to discarding can be reduced.

In a possible implementation, the second label is determined based on the first label and the adjustment value corresponding to the second device.

In a possible implementation, the method further includes: updating, by the first device, the adjustment value when the cycle value of the cycle of the first device jumps to a maximal value or to a minimal value.

According to the packet processing method in this application, a value representing a cycle within a specific range may be cyclically used by updating an adjustment value. This can avoid increasing the cycle of the first device infinitely, so that a quantity of bits occupied by a label carried in a packet sent by the first device can be reduced, and overheads can be reduced.

In a possible implementation, the method further includes: receiving, by the first device, an update message, where the update message is sent when the cycle value of the cycle of the second device jumps to a maximal value or to a minimal value; and updating, by the first device, the adjustment value based on the update message.

According to a second aspect, a packet processing apparatus is provided. The apparatus is configured to perform the method according to any one of the first aspect or the possible implementations of the first aspect. Specifically, the apparatus may include a module configured to perform the method according to any one of the first aspect or the possible implementations of the first aspect.

**BRIEF DESCRIPTION OF DRAWINGS**

FIG. 1 is a schematic structural diagram of a network according to this application;
FIG. 2 is an example flowchart of a packet processing method according to this application;
FIG. 3 is a schematic diagram of updating an adjustment value according to this application;
FIG. 4 is a schematic structural diagram of a packet processing apparatus according to this application; and
FIG. 5 is another schematic structural diagram of a packet processing apparatus according to this application.

**DESCRIPTION OF EMBODIMENTS**

The following describes technical solutions of this application with reference to the accompanying drawings.

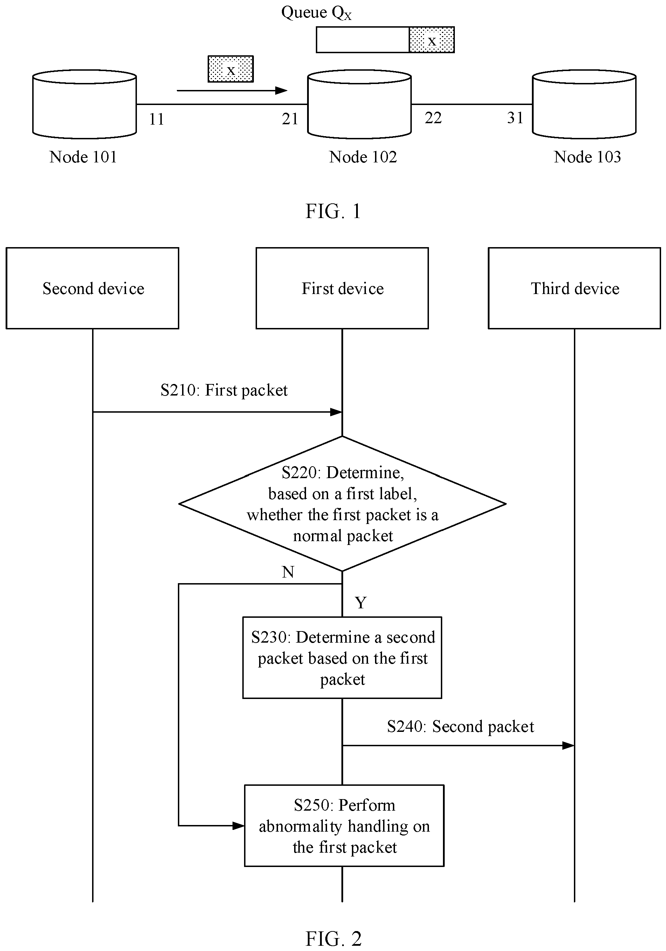

FIG. 1 is a schematic structural diagram of a network according to this application. Referring to FIG. 1, the network includes a node 101, a node 102, and a node 103. An interface of the node 101 is connected to an interface 21 of the node 102, and an interface 22 of the node 102 is connected to an interface 31 of the node 103. A packet may be sent between nodes. For example, the node 101 may send a packet to the node 102 through the interface 11, and after the interface 21 of the node 102 receives the packet sent by the node 101, the node 102 may send the packet to the node 103 through the interface 22. The node 101 may be an ingress edge node, the node 102 may be a core node (or referred to as an intermediate node), and the node 103 may be an egress edge node. Alternatively, the node 101 may be a host device, the node 102 may be a core node, and the node 103 may be another core node. Alternatively, the node 101, the node 102, and the node 103 may be all core nodes. It should be understood that locations or functions of the foregoing enumerated nodes in the network are merely examples for description, and shall not constitute any limitation on this application.

Each node shown in FIG. 1 locally maintains a clock, and the clocks of the nodes may not be synchronized. The following uses the node 101 and the node 102 as an example for description.

During initialization, the node 101 and the node 102 each may independently generate an initial count value. For example, the initial count value of the node 101 may be denoted as $C_A$, and the initial count value of the node 102 may be denoted as $C_B$. Based on a clock of the node 101, $C_A$ is increased by S each time a time T (for example, 10 μs) elapses. S represents an integer that is not zero, S is a constant, and S may be a positive number or a negative number. For example, S may be -1, and after the time T, $C_A$ changes to $C_A$ - 1. For another example, S may be 2, and after the time T, $C_A$ changes to $C_A$ + 2. Similarly, based on a clock of the node 102, $C_B$ is increased by S each time the time T elapses. $C_A$ may be equal or unequal to $C_B$. This is not limited in this application.

It should be noted that, in the following descriptions, a description similar to a description that the node 101 sends a packet in a cycle X means that the node 101 sends a packet in a cycle corresponding to a count value X of the node 101. For example, that the node 101 sends a packet in a cycle 3 means that the node 101 sends a packet in a cycle corresponding to $C_A$ = 3, or in other words, when $C_A$ = 3, the node 101 sends the packet. It should be understood that if an initial value of $C_A$ is 3 and S is 2, the node 101 may send a packet only in a cycle 3, a cycle 5, or a cycle 7, but does not send a packet in a cycle 2, a cycle 4, or a cycle 6.

When sending a packet to the node 102, the node 101 may carry a label in the packet, where the label is determined based on a cycle in which the node 101 sends the packet. For example, the label may indicate the cycle in which the node 101 sends the packet, that is, a cycle value indicated by the label is X, where X = $C_A$. In addition, the label may alternatively be a value related to $C_A$, for example, X = $C_A$ + a preset value, where the preset value may be, for example, ΔX or another possible value described below. This is not limited in this application. For ease of understanding, it is considered that X = $C_A$ in the following descriptions unless otherwise specified. In addition, unless otherwise specified, a label P indicates that a cycle value indicated by the label is P, and P is any possible cycle value.

After receiving the packet sent by the node 101, the node 102 buffers the packet into a corresponding queue Qx based on X, and sends the packet in the queue in a cycle Y (that is, Y = $C_B$) of the node 102. The queue Qx is one of U (U ≥ 3) queues corresponding to an interface, of the node 102, through which a packet whose X = $C_A$ is sent. The interface may be, for example, the interface 22 shown in FIG. 1.

In an implementation, the queue Qx may be a queue whose index (or number) is $\left\lfloor X / |S| \right\rfloor \% U$ or $\left\lfloor Y / |S| \right\rfloor \% U$ in the U queues. $\lfloor \ \rfloor$ represents rounding down to a nearest integer, $| \ |$ represents taking an absolute value, and % represents taking a remainder. Alternatively, the queue Qx may be another queue in the U queues. This is not limited in this application. It should be noted that in this application, the node 102 can send only one queue in any cycle, and cannot send a plurality of queues at the same time. In addition, when sending a queue, the queue cannot receive a packet. It should be understood that sending a queue and sending a packet in the queue in this application are same concepts.

In an implementation, Y = X + ΔX, where ΔX represents an adjustment value that corresponds to the node 101 and that is stored on the node 102. The adjustment value is used to calculate a specific cycle, of the node 102, in which any packet sent by the node 101 needs to be sent. The adjustment value may be calculated based on a length of an optical fiber between the node 102 and the node 101, or may be obtained by sending a test packet. For example, the node 101 sends a test packet at the end of a cycle x, where the test packet carries a label x, and the node 102 receives the packet in a cycle y. In this case, ΔX = y + 1 - x. Alternatively, the node 101 sends the test packet at the beginning of a cycle x, where the test packet carries a label x, and the node 102 receives the packet in a cycle y. In this case, ΔX = y + 2 - x.

It should be understood that in a possible implementation, $y + 1 - x \le \Delta X < y + U - x$, or $y + 1 - x \le \Delta X \le y + U - x$, where ΔX represents an integer, and a definition of U is as described above. If a cycle of the node 101 and a cycle of the node 102 are updated synchronously, that is, $C_A$ and the $C_B$ are updated at the same time, $y + 1 - x \le \Delta X \le y + U - x$. If a cycle of the node 101 and a cycle of the node 102 are not updated synchronously, that is, $C_A$ and the $C_B$ are not updated at the same time, $y + 1 - x \le \Delta X < y + U - x$.

In a normal case, that is, when an underlying latency variation is within a limited range, the node 102 sends a packet according to the foregoing rule. However, in an actual network, there are indeed cases in which an abnormal underlying latency may be caused. For example, the cases include: a queuing latency introduced by a buffered queue of a link-layer device/interface, and a latency change caused due to underlying transmission network path switching in an IP+ underlying transmission network scenario. These abnormal latencies may cause the following case: A packet may arrive at a next-hop node in advance or arrive at a next-hop node after a long latency. This affects quality of service.

For example, assuming that a queue index corresponding to a packet whose cycle value indicated by a label is X is $\lfloor X/\lfloor S\rfloor\rfloor\%U$, and U = 3, in a normal case, packets whose X = 4, X = 5, and X = 6 and that are sent by the node 101 should respectively enter a queue 1, a queue 2, and a queue 3. After the node 102 sends the packet whose X = 4, the queue 1 may be used to buffer a packet whose X = 7. However, if a link latency between the node 101 and the node 102 is abnormal, and the packet whose X = 4 and the packet whose X = 7 arrive at the node 102 at the same time, the node 102 does not learn how to process the packets or the node 102 may discard some packets. This may affect an uncertain upstream packet, and consequently quality of service cannot be ensured.

In view of this, this application provides a packet processing method. In the method, a packet detection mechanism is provided, so that normal sending processing is performed when it is determined that a packet is a normal packet. This avoids chain impact of an abnormal packet caused by an abnormal underlying latency on an uncertain target flow, and helps improve quality of service.

Without loss of generality, the following describes the method in this application in detail by using an example in which a first device detects a first packet. The first packet may be any packet that is sent by a second device to the first device. The first device may be the node 102 shown in FIG. 1, and the second device may be the node 101 shown in FIG. 1.

FIG. 2 is a schematic flowchart of a packet processing method according to this application. The following describes each step in FIG. 2 in detail.

S210: A first device receives a first packet.

The first packet carries a first label, and the first label is determined based on a cycle in which a second device sends the first packet. For example, the first label may indicate the cycle in which the second device sends the first packet. In other words, a cycle value indicated by the first label is the cycle in which the second device sends the first packet. In addition, the cycle value indicated by the first label may alternatively be a value related to but unequal to a value of the cycle in which the second device sends the first packet. For example, the cycle value indicated by the first label is a sum of a preset value and the value of the cycle in which the second device sends the first packet. The preset value may be, for example, an adjustment value Δ in the following. However, this is not limited in this application.

The following describes this application by using only an example in which the cycle value indicated by the first label is the cycle in which the second device sends the first packet. In addition, for ease of understanding and description, the cycle value indicated by the first label, that is, the cycle in which the second device sends the first packet, is denoted as X1. In other words, the second device sends the first packet in the cycle X1. It should be understood that, referring to the foregoing description, it can be learned that a count value of a second cycle corresponding to the cycle X1 is X1. For example, the second device is the node 101. When X1 = 5 indicates that $C_A$ = 5, the node 101 sends the first packet. A case in which the first device receives the first packet and a case in which the first device sends a second packet are similar to the case in which the second device sends the first packet. Details are not described again.

S220: The first device determines, based on the first label, whether the first packet is a normal packet.

For example, the first device may determine, based on the cycle value indicated by the first label, that is, X1, whether the first packet is a normal packet.

The normal packet is a packet that does not affect reception of a packet other than the first packet, or is a packet that is sent when a latency variation is within a specific range. An abnormal packet, contrast to the normal packet, is a packet that affects reception of a packet other than the first packet, or is a packet that is sent when a latency variation exceeds a specific range.

S230: If determining that the first packet is a normal packet, the first device determines a second packet based on the first packet, where the second packet carries a second label.

For example, the first device may obtain the second packet by replacing the first label in the first packet with the second label.

For another example, the first device may obtain the second packet by adding the second label to the first packet. It should be understood that the second packet in this case carries both the first label and the second label.

It should be understood that the first device may alternatively determine the second packet in another manner. This is not limited in this application.

S240: The first device sends the second packet to a third device in a first cycle.

The second label in the second packet is determined based on the first cycle. For example, the second label may indicate a cycle in which the first device sends the second packet. In other words, a cycle value indicated by the second label is the cycle in which the first device sends the second packet, that is, the cycle value indicated by the second label is the first cycle. In addition, the cycle value indicated by the second label may alternatively be a value related to but unequal to a value of the first cycle. For example, the cycle value indicated by the second label is a sum of the value of the first cycle and a preset value. This is not limited in this application.

The following describes this application by using only an example in which the cycle value indicated by the second label is the first cycle. In addition, for ease of understanding and description in the following, the cycle value indicated by the second label, that is, the second cycle, is denoted as X2.

In a possible implementation, the first cycle or the cycle value indicated by the second label may be determined based on an adjustment value $\Delta$ that is of the first device and that corresponds to the second device. For example, X2 = X1 + $\Delta$. For a manner of determining $\Delta$, refer to the foregoing described manner of determining $\Delta$X. Details are not described herein again.

It can be learned from the foregoing description that after receiving the first packet, the first device needs to buffer the packet into a corresponding queue. The buffering operation may be performed after S220. However, this is not limited in this application. For example, the first device may buffer the packet after S230 and before S240. If the first device performs the buffering operation after S220, and if the first device determines that the first packet is a normal packet, the first device may buffer the first packet into the corresponding queue, and then process the first packet to obtain the second packet. Alternatively, the first device may buffer the obtained second packet into a corresponding queue.

In a possible implementation, the queue that is used to buffer the first packet or the second packet may be determined based on a quantity of buffering queues that can be used by an interface (which is denoted as a first interface) that is of the first device and that is used to send a packet of the second device.

In this application, for ease of understanding and description, the quantity of buffering queues that can be used by the first interface is denoted as w, where w $\geq$ 3, and w represents an integer.

In this case, the queue that is used to buffer the first packet or the second packet may be a queue whose index is $\left\lfloor X1/|S| \right\rfloor \% w$ or $\left\lfloor (X1+\Delta)/|S| \right\rfloor \% w$ in the w queues. It should be understood that w is less than or equal to a total quantity of buffering queues corresponding to the first interface. For example, if the first device is the node 102 and the second device is the node 101, 3 $\leq$ w $\leq$ U. w may be set when the first device is initialized, or may be set at any time before the second device sends a packet. This is not limited in this application. In addition, w may be independently set by the first device, or may be set by a control plane.

According to the packet processing method in this application, a packet detection mechanism is provided, so that normal sending processing is performed when it is determined that a packet is a normal packet. This avoids chain impact of an abnormal packet caused by an abnormal underlying latency on an uncertain target flow, and helps improve quality of service.

Optionally, in an embodiment of this application, the method may further include the following step:

S250: If determining that the first packet is an abnormal packet, the first device performs abnormality handling on the first packet.

For example, the first device may discard the first packet, or the first device may perform rescheduling processing on the first packet. The rescheduling processing may be correspondingly increasing or decreasing a delayed time in a subsequent forwarding process based on a quantity of cycles for which the first packet is advanced or delayed, to correct a forwarding time of the abnormal packet.

According to the packet processing method provided in this application, rescheduling processing is performed on the abnormal packet instead of simply being discarded. In this way, a retransmission latency caused due to discarding can be reduced.

The following describes in detail how the first device determines, based on the first label, whether the first packet is a normal packet.

Optionally, in an embodiment of this application, the first device may determine, based on the first label and the second cycle of the first device, whether the first packet is a normal packet.

For example, the first device may determine, based on the cycle value (that is, X1) indicated by the first label and the second cycle of the first device, whether the first packet is a normal packet.

The second cycle is a cycle in which the first device receives the first packet, or is a cycle after a cycle in which the first device receives the first packet and before the first cycle. For example, the second cycle may be a cycle in which the first device determines whether the first packet is a normal packet. The first device may determine, in the cycle in which the first packet is received, whether the first packet is a normal packet, or may determine, in any cycle before the first cycle, whether the first packet is a normal packet. For ease of understanding and description, the second cycle is denoted as C1 in the following.

Further, the first device may specifically determine, in Manner 1 or Manner 2, whether the first packet is a normal packet.

Manner 1

The first device determines whether the cycle value indicated by the first label is within a first window corresponding to the second cycle. If the cycle value indicated by the first label is within the first window, the first device may determine that the first packet is a normal packet; or if the cycle value indicated by the first label is not within the first window, the first device may determine that the first packet is an abnormal packet. Different cycles of the first device correspond to different first windows. In other words, the first window is updated with the cycle of the first device.

In a possible implementation, the first window is $[C1 - \Delta + S, C1 + (w - 1) * S - \Delta]$.

To be specific, when S is a positive number, if the following formula (1) is true, the first packet is a normal packet; or if the following formula (1) is not true, the first packet is an abnormal packet.

$$C1 - \Delta + S \leq X1 \leq C1 + (w - 1) * S - \Delta \qquad (1)$$

Meanings of $\Delta$, w, and C1 are as described above.

When S is a negative number, if the following formula (2) is true, the first packet is a normal packet; or if the following formula (2) is not true, the first packet is an abnormal packet.

$$C1 + (w - 1) * S - \Delta \leq X1 \leq C1 - \Delta + S \qquad (2)$$

Meanings of $\Delta$, w, and C1 are as described above.

It should be understood that the first window may alternatively be a window smaller than $[C1 - \Delta + S, C1 + (w - 1) * S - \Delta]$, or the first window may alternatively be a window slightly larger than $[C1 - \Delta + S, C1 + (w - 1) * S - \Delta]$. This depends on tolerance of a system. In addition, first windows corresponding to some cycles may alternatively be manually configured, and first windows corresponding to some other cycles may be smaller or larger than $[C1 - \Delta + S, C1 + (w - 1) * S - \Delta]$.

Formula (1) is described below by using an example with reference to Table 1. In the following description, it is assumed that S = 1, $\Delta$ = 6, X2 = X1 + $\Delta$, w = 5, and C1 represents the cycle in which the first device receives the first packet.

Table 1 shows a case in which the first device receives a packet sent by the second device. The second column indicates a cycle in which the second device sends the packet, the first column indicates a cycle in which the first device receives a packet carrying a corresponding label, and the third column indicates a queue into which the packet carrying the corresponding label should enter.

**EP 3 902 217 B1**

**Table 1**

| Current cycle of the second device | Cycle value indicated by a label carried in a packet sent by the first device | Queue |
|---|---|---|
| 6 | 1 | Q1 |
| | 2 | Q2 |
| 7 | 2 | Q2 |
| | 3 | Q3 |
| 8 | 3 | Q3 |
| | 4 | Q4 |
| 9 | 4 | Q4 |
| | 5 | Q0 |
| 10 | 5 | Q0 |
| | 6 | Q1 |
| 11 | 6 | Q1 |
| | 7 | Q2 |
| 12 | 7 | Q2 |
| | 8 | Q3 |
| 13 | 8 | Q3 |
| | 9 | Q4 |
| 14 | 9 | Q4 |
| | 10 | Q0 |
| 15 | 10 | Q0 |
| | 11 | Q1 |
| 16 | 11 | Q1 |
| | 12 | Q2 |
| 17 | 12 | Q2 |
| | 13 | Q3 |
| ... | ... | ... |
| | ... | ... |

Example 1: It is assumed that C1 = 12.

In this case, $7 \leq X1 \leq 10$. To be specific, if cycle values indicated by labels of packets received by the first device in the cycle 12 belong to [7, 10], it indicates that these packets are normal packet; or if cycle values indicated by labels of packets received by the first device in the cycle 12 do not belong to [7, 10], these packets are abnormal packets.

Specifically, when C1 = 12, the first device sends a packet that is to be sent in the cycle 6 by the first device, that is, the first device sends the Q1, and may receive the Q2, the Q3, the Q4, and the Q0. It can be seen from Table 1 that cycles of the second device that correspond to the Q2, the Q3, the Q4, and the Q0 are respectively 7, 8, 9, and 10, and the first device sends the Q2, the Q3, the Q4, and the Q0 only in a cycle after the cycle 12. Therefore, if $7 \leq X1 \leq 10$, it is considered that the first packet is a normal packet. It should be understood that although a queue corresponding to a packet sent by the second device in the cycle 5 is Q0, because the first device sends, in the cycle 11, the packet sent by the second device in the cycle 5, if the packet sent by the second device in the cycle 5 is received in C1 = 12, the packet is considered as an abnormal packet.

8

Example 2: It is assumed that X1 = 8.

In this case, $10 \leq C1 \leq 13$. To be specific, if the first device receives a packet whose X1 = 8 in a cycle of the cycle 12 to the cycle 15, it is considered that the packet is a normal packet; or if the first device does not receive a packet whose X1 = 8 in a cycle of the cycle 12 to the cycle 15, it is considered that the packet is an abnormal packet.

Specifically, the first device sends the packet whose X1 = 8 in the cycle 14, and a queue into which the packet whose X1 = 8 enters is the Q3. If the first device receives the packet whose X1 = 8 in a cycle before the cycle 14 and in which the corresponding Q3 is empty, it is considered that the packet is a normal packet. Referring to Table 1, it can be seen that when the first device receives the packet whose X1 = 8 in any one of the cycle 10 to the cycle 13, it is considered that the packet whose X1 = 8 is a normal packet.

More specifically, it can be seen from Table 1 that, in a normal case, the packet whose X1 = 8 arrives in the cycle 12 or 13. In this case, it may be determined that the packets whose X1 = 8 received in the cycles 12 and 13 are normal packets.

In the four cycles between the cycle 10 and the cycle 13, the Q3 is used to buffer packets whose X1 = 8. It can be seen from Table 1 that even if the packet whose X1 = 8 arrives in advance in the cycle 10 or 11, receiving and sending of another packet are not affected. Therefore, the packets whose X1 = 8 received in the cycles 10 and 11 are normal packets.

However, if the packet whose X1 = 8 is received in a cycle before the cycle 10, or if the packet whose X1 = 8 is received in a cycle after the cycle 13, it is considered that the received packet is an abnormal packet. Specifically, for the cycle 9 or 14, when the first device is sending a packet buffered in the Q3, because the first device is not allowed to receive a packet when the first device is sending a packet, if the first device receives the packet whose X1 = 8, it is considered that the packet is an abnormal packet. For the cycles 6 to 8, the Q3 needs to buffer a packet that is sent by the first device in a cycle 3. If the packet whose X1 = 8 is received, it is considered that the packet is an abnormal packet. For subsequent cycles such as the cycles 15 and 16, because the first device has sent the packet whose X1 = 8 in the cycle 14, if the first device receives, in the subsequent cycles such as the cycles 15 and 16, the packet whose X1 = 8 again, when the first device buffers the packet in the Q3, not only receiving of a packet by the first device in the cycle 17 is affected but also the packet received by the first device in the cycle 17 is delayed to be sent. Therefore, it may be considered that the packet whose X1 = 8 that is received again is an abnormal packet.

It is easy to understand that the examples 1 and 2 describe the meaning of the formula (1) from two perspectives.

It should be understood that, a principle of determining, based on the first window when S is a value that is not 1, whether the first packet is a normal packet is similar to a principle of determining, based on the first window when S is 1, whether the first packet is a normal packet. Details are not described herein again.

Manner 2

The first device first determines the second label based on the first label, and then determines whether the cycle value indicated by the second label is within a second window corresponding to the second cycle. If the cycle value indicated by the second label is within the second window, the first device may determine that the first packet is a normal packet; or if the cycle value indicated by the second label is not within the second window, the first device determines that the first packet is an abnormal packet. Different cycles of the first device correspond to different second windows. In other words, the second window is updated with the cycle of the first device.

As described above, the cycle value indicated by the second label may be determined based on $\Delta$, for example, X2 = X1 + $\Delta$. However, a specific manner of determining the second label is not limited in this application.

In a possible implementation, the second window is [C1 + S, C1 + (w - 1) * S].

To be specific, when S is a positive number, if the following formula (3) is true, the first packet is a normal packet; or if the following formula (3) is not true, the first packet is an abnormal packet.

$$C1 + S \leq X2 \leq C1 + (w - 1) * S \qquad (3)$$

Meanings of $\Delta$, w, and C1 are as described above.

When S is a negative number, if the following formula (4) is true, the first packet is a normal packet; or if the following formula (4) is not true, the first packet is an abnormal packet.

$$C1 + (w - 1) * S \leq X2 \leq C1 + S \qquad (4)$$

Meanings of $\Delta$, w, and C1 are as described above.

It should be understood that the second window may alternatively be a window smaller than [C1 + S, C1 + (w - 1) * S], or the second window may alternatively be a window slightly larger than [C1 + S, C1 + (w - 1) * S]. This depends on tolerance of a system. In addition, second windows corresponding to some cycles may alternatively be manually configured, and second windows corresponding to some other cycles may be smaller or larger than [C1 + S, C1 + (w - 1) * S].

Formula (3) is described below by using an example with reference to Table 1. It is also assumed herein that S = 1, $\Delta$ = 6, X2 = X1 + $\Delta$, w = 5, and C1 represents a cycle in which the first device receives the first packet.

Example 3: It is assumed that C1 = 12.

In this case, $13 \leq X2 \leq 16$. To be specific, if the first device receives, in the cycle 12, a packet that needs to be sent in any one of the cycle 13 to the cycle 16, the first device considers that the packet is a normal packet.

Specifically, in the cycle 12, the first device sends a packet whose X1 = 6, and a queue corresponding to the packet whose X1 = 6 is the Q1. The first device may receive, in the cycle 12, packets corresponding to the queues Q2, Q3, Q4, and Q0. It can be seen from Table 1 that packets whose X1 = 7/8/9/10 are respectively corresponding to the Q2, the Q3, the Q4, and the Q0, and cycles when the packets whose X1 = 7/8/9/10 need to be sent are respectively 13, 14, 15, and 16. Therefore, if the first device receives, in the cycle 12, the packet that needs to be sent in any one of the cycle 13 to the cycle 16, the first device considers that the packet is a normal packet.

It should be understood that, a principle of determining, based on the second window, whether the first packet is a normal packet when S is a value not 1 is similar to a principle of determining, based on the second window, whether the first packet is a normal packet when S is 1. Details are not described herein again.

A person skilled in the art may understand that, in an actual operation, any equivalent variation of the formula (1) to the formula (4) shall fall within the scope of this application.

Optionally, in an embodiment of this application, the method may further include: updating, by the first device, $\Delta$ when the cycle of the first device jumps.

Specifically, a cycle (or referred to as a cycle count/cycle value) of the first device, starting from an initial cycle value (that is, an initial count value) of the first device, is increased by S each time a fixed time elapses. If S is a positive number, when the cycle reaches a maximum value $C_{max}$, if the cycle is increased by S, the cycle jumps to a minimum value $C_{min}$, where $C_{max} > C_{min}$. For example, the maximum value of the cycle is 11, and if the cycle is increased by S = 1, the cycle jumps to 1, where a cycle 0 may be forbidden to be used. If S is a negative number, when the cycle reaches the minimum value $C_{min}$, if the cycle is increased by S, the cycle jumps to the maximum value $C_{max}$. When the cycle jumps, the first device updates $\Delta$. It should be understood that a value of $C_{min}$ is not limited in this application.

In a possible implementation, $\Delta$ is updated as $\Delta'$, and
$$\Delta' = \Delta - \frac{|S|}{S}\left(C_{max} - C_{min} + |S|\right)$$
. As described above, $C_{min}$ represents the minimum value of the cycle (that is, the count value) of the first device, and $C_{max}$ represents the maximum value of the cycle of the first device. $C_{max}$ - $C_{min}$ + |S| = k * |S| * w, $k \geq 1$, and k represents an integer.

In addition, the first device further updates an adjustment value corresponding to another device, for example, the first device further updates an adjustment value corresponding to the third device.

According to the packet processing method in this application, a value representing a cycle within a specific range may be cyclically used by updating an adjustment value. This can avoid increasing the cycle of the first device infinitely, so that a quantity of bits occupied by a label carried in a packet sent by the first device can be reduced, and overheads can be reduced.

Optionally, when the cycle jumps, the first device further sends an update message (for example, denoted as a first update message) to devices (for example, the third device and the first device) connected to the first device. The first update message is used by the other devices to update the adjustment value corresponding to the first device. The first update message may include $C_{min}$ and $C_{max}$, and each of the devices updates an adjustment value of the device based on $C_{min}$ and $C_{max}$.

For example, the second device may update the adjustment value corresponding to the first device to $\Delta_1'$,
where $$\Delta_1' = \Delta_1 + \frac{|S|}{S}\left(C_{max} - C_{min} + |S|\right)$$
, and $\Delta1$ represents an adjustment value that is of the second device and that corresponds to the first device before the update. Similarly, the third device may update the adjustment value

$$\Delta_2' = \Delta_2 + \frac{|S|}{S}\left(C_{max} - C_{min} + |S|\right)$$

corresponding to the first device to $\Delta_2'$, where , and $\Delta2$ represents an adjustment value that is of the third device and that corresponds to the first device before the update.

The other devices are enabled to update the adjustment value corresponding to the first device, so that the other devices can correctly determine whether the packet received from the first device is a normal packet.

It should be understood that in this application, $C_{min}$ and $C_{max}$ of the first device, the second device, and the third device may be respectively the same. However, this is not limited in this application.

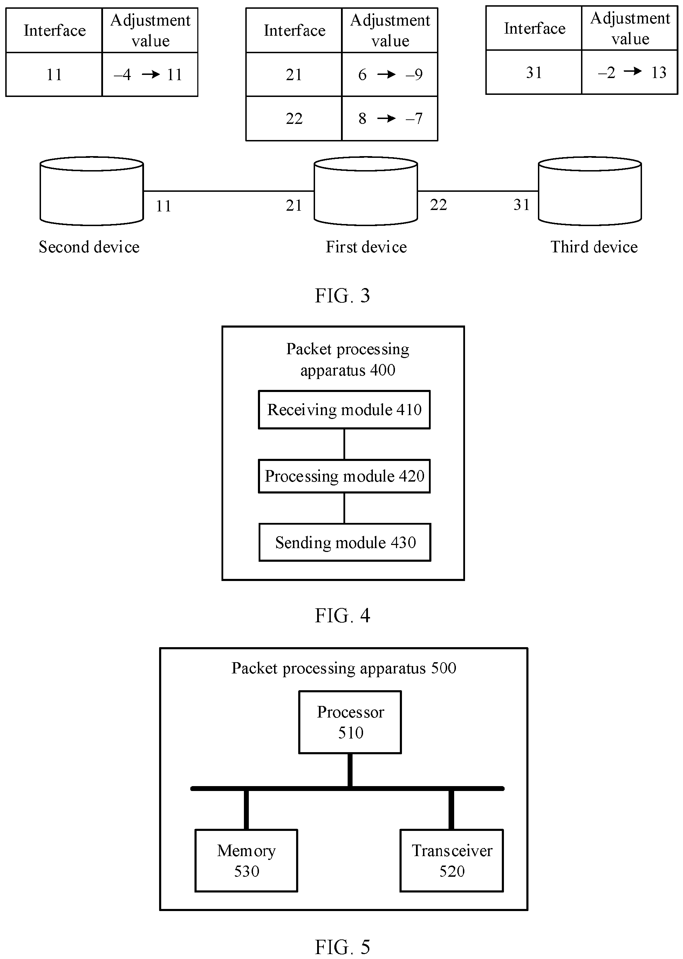

The following provides a description that each of the devices updates the adjustment value with reference to FIG. 3.

It is assumed that S = 1; before the update, that an adjustment value that is of the second device and that corresponds to the first device is 6, that is, an adjustment value of the interface 21 is 6; that an adjustment value that is of the third device and that corresponds to the first device is 8, that is, an adjustment value of the interface 22 is 8; that $C_{min}$ = 1 and $C_{max}$ = 15; that an adjustment value that is of the first device and that corresponds to the second device is -4, that is, an adjustment value of the interface 11 is -4; and that an adjustment value that is of the first device and that corresponds to the third device is -2, that is, an adjustment value of the interface 31 is -2. In this case, when jumping occurs, the first device updates the adjustment value that is of the second device and that corresponds to the first device to -9, and updates the adjustment value that is of the third device and that corresponds to the first device to -7. When jumping occurs, the first device sends a first update message to the second device and the third device, the second device may update, based on the first update message, the adjustment value that is of the second device and that corresponds to the first device to 11, and the third device updates, based on the first update message, the adjustment value that is of the third device and that corresponds to the first device to 13.

Further, when the cycle of the first device jumps, the first device may accordingly stop receiving a reservation request message. The reservation request message is used to reserve a resource.

In addition, in an embodiment of this application, the method may further include the following.

The first device receives an update message (for example, denoted as a second update message), where the second update message is sent when the cycle of the second device jumps; and the first device updates, based on the second update message, the adjustment value corresponding to the second device.

It should be understood that a manner in which the first device updates, based on the second update message, the adjustment value that is of the second device and that corresponds to the first device is similar to a manner in which the second device updates, based on the first update message, the adjustment value that is of the first device and that corresponds to the second device. Details are not described herein.

FIG. 4 shows a packet processing apparatus 400 according to an embodiment of the present invention. The packet processing apparatus 400 implements some or all functions of the first device by using software, hardware, or a combination thereof. The packet processing apparatus may be the first device or a chip applied to the first device. As shown in FIG. 4, the packet processing apparatus 400 includes a receiving module 410, a processing module 420, and a sending module 430.

The receiving module 410 is configured to receive a first packet sent by a second device, where the first packet carries a first label, and the first label is determined based on a cycle in which the second device sends the first packet.

The processing module 420 is configured to determine, based on the first label, whether the first packet is a normal packet.

The processing module 420 is further configured to: if the first packet is a normal packet, determine a second packet based on the first packet, where the second packet carries a second label.

The sending module 430 is configured to send the second packet to a third device in a first cycle, where the second label is determined based on the first cycle.

In a possible implementation, the processing module 420 is specifically configured to:

determine, based on the first label and a second cycle of the apparatus, whether the first packet is a normal packet, where the second cycle is a cycle in which the apparatus receives the first packet, or is a cycle after a cycle in which the apparatus receives the first packet and before the first cycle.

In a possible implementation, a cycle value indicated by the first label is the cycle in which the second device sends the first packet.

The processing module 420 is specifically configured to:

determine whether the cycle value indicated by the first label is within a first window corresponding to the second cycle, where different cycles of the apparatus correspond to different first windows; and
if the cycle value indicated by the first label is within the first window, determine that the first packet is a normal packet; or if the cycle value indicated by the first label is not within the first window, determine that the first packet is an abnormal packet.

In a possible implementation, a cycle value indicated by the second label is the first cycle.

The processing module 420 is specifically configured to:

determine the second label based on the first label;
determine whether the cycle value indicated by the second label is within a second window corresponding to the second cycle, where different cycles of the apparatus correspond to different second windows; and
if the cycle value indicated by the second label is within the second window, determine that the first packet is a normal packet; or if the cycle value indicated by the second label is not within the first window, determine that the first packet is an abnormal packet.

In a possible implementation, the first window is [C1 - $\Delta$ + S, C1 + (w - 1) * S - $\Delta$], where $\Delta$ represents an adjustment value corresponding to the second device, and the adjustment value is used to determine the second label; C1 represents the second cycle; w $\geq$ 3, and w represents an integer; and S represents an integer that is not zero.

In a possible implementation, the second window is [C1 + S, C1 + (w - 1) * S], where C1 represents the second cycle of the apparatus, w $\geq$ 3, w represents an integer, and S represents an integer that is not 0.

In a possible implementation, the processing module 420 is further configured to:
if determining that the first packet is an abnormal packet, perform abnormality handling on the first packet, where the abnormality handling includes discarding the first packet or performing rescheduling processing on the first packet.

In a possible implementation, the second label is determined based on the first label and the adjustment value corresponding to the second device.

In a possible implementation, the processing module 420 is further configured to:
update the adjustment value when the cycle of the apparatus jumps.

In a possible implementation, the receiving module 410 is further configured to receive an update message, where the update message is sent when the cycle of the second device jumps; and
the processing module 420 is further configured to update the adjustment value based on the update message.

The apparatus is configured to perform the foregoing method embodiment, implementation principles and technical effects thereof are similar. Details are not described herein. In addition, the sending module in the foregoing embodiment may be a transmitter, the receiving module may be a receiver, and the processing module may be a processor. Details are not described herein again.

As shown in FIG. 5, this application further provides a packet processing apparatus 500. It should be understood that the packet processing apparatus may correspond to the packet processing apparatus 400, or may correspond to the first device in the foregoing method embodiment.

Referring to FIG. 5, the packet processing apparatus 500 includes a processor 510 and a transceiver 520. Optionally, the packet processing apparatus 500 further includes a memory 530. Through an internal connection path, the processor 510, the transceiver 520, and the memory 530 communicate with each other, and transfer a control signal and/or a data signal. The memory 530 is configured to store a computer program. The processor 510 is configured to call and run the computer program in the memory 530, to control the transceiver 520 to send and receive a signal.

The processor 510 and the memory 530 may be integrated into one processing apparatus. The processor 510 is configured to execute program code stored in the memory 530, to implement the foregoing functions. During specific implementation, the memory 530 may be alternatively integrated into the processor 510, or may be independent of the processor 510.

When the program instruction stored in the memory 530 is executed by the processor 510, the processor 510 is configured to: control the transceiver 530 to receive a first packet sent by a second device, where the first packet carries a first label, and a cycle value indicated by the first label is the cycle in which the second device sends the first packet; determine, based on the first label, whether the first packet is a normal packet; if the first packet is a normal packet, determine a second packet based on the first packet, where the second packet carries a second label; and control the transceiver 530 to send the second packet to a third device in a first cycle, where a cycle value indicated by the second label is the first cycle.

It should be understood that the processor 510 may be configured to execute the actions that are implemented inside the first device and that are described in the foregoing method embodiment, and the transceiver 520 may be configured to execute the receiving or sending action of the first network device described in the foregoing method embodiment. For details, refer to the descriptions in the foregoing method embodiment. Details are not described herein again.

An embodiment of this application further provides a computer-readable storage medium. A computer program is stored in the computer-readable storage medium. When the computer program is executed by a computer, the computer is enabled to implement the method provided in the foregoing method embodiment.

An embodiment of this application further provides a computer program product including an instruction. When the instruction is executed by a computer, the computer is enabled to implement the method provided in the foregoing method embodiment.

For explanations and beneficial effects of related content in the packet processing apparatus provided above, refer to the corresponding method embodiment provided in the foregoing description. Details are not described herein again.

It should be understood that, the processor mentioned in the embodiments of this application may be a central processing unit (Central Processing Unit, CPU), the processor may further be another general-purpose processor, a digital signal processor (Digital Signal Processor, DSP), an application-specific integrated circuit (Application Specific Integrated Circuit, ASIC), a field programmable gate array (Field Programmable Gate Array, FPGA), or another programmable logical device, discrete gate or transistor logical device, discrete hardware component, or the like. The general-purpose processor may be a microprocessor, or the processor may be any conventional processor or the like.

It should be further understood that the memory mentioned in the embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA, or another programmable logic device, discrete gate, transistor logic device, or discrete hardware component, the memory (storage module) is integrated into the processor.

All or some of the foregoing embodiments may be implemented by using software, hardware, firmware, or any combination thereof. When software is used to implement the embodiments, the foregoing embodiments may be implemented completely or partially in a form of a computer program product. The computer program product includes one or more computer instructions. When the computer program instructions are loaded or executed on a computer, the procedure or functions according to the embodiments of the present invention are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), or a semiconductor medium. The semiconductor medium may be a solid-state drive.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

It should be understood that the term "and/or" in this application describes only an association relationship for describing associated objects and represents that three relationships may exist. For example, A and/or B may represent the following three cases: Only A exists, both A and B exist, and only B exists. The character "/" generally indicates an "or" relationship between associated objects. "At least one" means one or more; "at least one of A and B", similar to "A and/or B", describes an association relationship between associated objects and represents that three relationships may exist. For example, A and/or B may represent the following three cases: Only A exists, both A and B exist, and only B exists.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the scope of this application.

**Claims**

1. A packet processing method, comprising:

   receiving (S210), by a first device (102), a first packet sent by a second device (101), wherein the first packet carries a first label, and the first label is determined based on a cycle in which the second device (101) sends the first packet, wherein the cycle corresponds to a cycle value that is an integer initialized based on a clock of the second device (101) and incremented by another integer each time a fixed time period has elapsed;
   determining (S220), by the first device (102) based on the first label and a second cycle of the first device, whether the first packet is a normal packet, wherein the first packet is determined to be normal when the latency of its transmission from the second device (101) to the first device (102) is within a specific range as determined based on the first label and the second cycle, wherein the second cycle is a cycle in which the first device (102) receives the first packet, or is a cycle after a cycle in which the first device (102) receives the first packet and before a first cycle;
   if determining that the first packet is a normal packet, determining (S230), by the first device (102), a second packet based on the first packet, wherein the second packet carries a second label; and
   sending (S240), by the first device (102), the second packet to a third device (103) in the first cycle, wherein the second label is determined based on the first cycle.

2. The method according to claim 1, wherein the cycle value indicated by the first label is the cycle in which the second device (101) sends the first packet; and
   the determining (S220), by the first device (102) based on the first label and a second cycle of the first device (102), whether the first packet is a normal packet comprises:

   determining, by the first device (102), whether the cycle value indicated by the first label is within a first window, wherein the first window is updated according to the second cycle, wherein different cycles of the first device (102) correspond to different first windows; and
   if the cycle value indicated by the first label is within the first window, determining, by the first device (102), that the first packet is a normal packet; or if the cycle value indicated by the first label is not within the first window, determining, by the first device (102), that the first packet is an abnormal packet.

3. The method according to claim 1, wherein a cycle value indicated by the second label is the first cycle; and
   the determining (S220), by the first device (102) based on the first label and a second cycle of the first device (102), whether the first packet is a normal packet comprises:

determining, by the first device (102), the second label based on the first label;

determining, by the first device (102), whether the cycle value indicated by the second label is within a second window, wherein the second window is updated according to the second cycle, wherein different cycles of the first device (102) correspond to different second windows; and

if the cycle value indicated by the second label is within the second window, determining, by the first device (102), that the first packet is a normal packet; or if the cycle value indicated by the second label is not within the second window, determining, by the first device (102), that the first packet is an abnormal packet.

4. The method according to claim 2, wherein the first window is [C1 - Δ + S, C1 + (w - 1) * S - Δ], wherein Δ represents an adjustment value corresponding to the second device (101), and the adjustment value is an integer and is used to determine the second label; C1 is an integer that represents the second cycle; w ≥ 3, and w represents an integer; and S represents an integer that is not zero.

5. The method according to claim 3, wherein the second window is [C1 + S, C1 + (w - 1) * S], wherein C1 is an integer that represents the second cycle; w ≥ 3, and w represents an integer; and S represents the another integer that is not zero.

6. The method according to any one of claims 1 to 5, wherein the method further comprises:
if determining that the first packet is an abnormal packet, performing, by the first device (102), abnormality handling on the first packet, wherein the abnormality handling comprises discarding the first packet or performing rescheduling processing on the first packet.

7. The method according to claim 4, wherein the second label is determined based on the first label and the adjustment value corresponding to the second device (101).

8. The method according to claim 7, wherein the method further comprises:
updating, by the first device (102), the adjustment value when the cycle value of the cycle of the first device (102) jumps to a maximal value or to a minimal value.

9. The method according to claim 7 or 8, wherein the method further comprises:

receiving, by the first device (102), an update message, wherein the update message is sent when the cycle value of the cycle of the second device (101) jumps to a maximal value or to a minimal value; and

updating, by the first device (102), the adjustment value based on the update message.

10. A packet processing apparatus (400), comprising:

a receiving module (410), configured to receive a first packet sent by a second device (101), wherein the first packet carries a first label, and the first label is determined based on a cycle in which the second device (101) sends the first packet, wherein the cycle corresponds to a cycle value that is an integer initialized based on a clock of the second device (101) and incremented by another integer each time a fixed time period has elapsed;

a processing module (420), configured to determine, based on the first label and a second cycle of the packet processing apparatus (400), whether the first packet is a normal packet, wherein the first packet is determined to be normal when the latency of its transmission from the second device (101) to the packet processing apparatus is within a specific range as determined based on the first label and the second cycle, wherein the second cycle is a cycle in which the packet processing apparatus (400) receives the first packet, or is a cycle after a cycle in which the apparatus (400) receives the first packet and before a first cycle; wherein

the processing module (420) is further configured to: if the first packet is a normal packet, determine a second packet based on the first packet, wherein the second packet carries a second label; and

a sending module (430), configured to send the second packet to a third device (103) in the first cycle, wherein the second label is determined based on the first cycle.

11. The apparatus (400) according to claim 10, wherein the cycle value indicated by the first label is the cycle in which the second device (101) sends the first packet; and

the processing module (420) is specifically configured to:

determine whether the cycle value indicated by the first label is within a first window, wherein the first window is updated according to the second cycle, wherein different cycles of the apparatus (400) correspond to different first windows; and

if the cycle value indicated by the first label is within the first window, determine that the first packet is a normal packet; or if the cycle value indicated by the first label is not within the first window, determine that the first packet is an abnormal packet.

12. The apparatus (400) according to claim 10, wherein a cycle value indicated by the second label is the first cycle; and the processing module (420) is specifically configured to:

determine the second label based on the first label;

determine whether the cycle value indicated by the second label is within a second window, wherein the second window is updated according to the second cycle, wherein different cycles of the apparatus (400) correspond to different second windows; and

if the cycle value indicated by the second label is within the second window, determine that the first packet is a normal packet; or if the cycle value indicated by the second label is not within the first window, determine that the first packet is an abnormal packet.

13. The apparatus (400) according to claim 11, wherein the first window is $[C1 - \Delta + S, C1 + (w - 1) * S - \Delta]$, wherein $\Delta$ represents an adjustment value corresponding to the second device (101), and the adjustment value is an integer used to determine the second label; C1 is an integer that represents the second cycle; $w \geq 3$, and w represents an integer; and S represents the another integer that is not zero.

**Patentansprüche**

1. Paketverarbeitungsverfahren, das Folgendes umfasst:

Empfangen (S210), durch eine erste Vorrichtung (102), eines durch eine zweite Vorrichtung (101) gesendeten ersten Pakets, wobei das erste Paket eine erste Kennzeichnung trägt, und wobei die erste Kennzeichnung basierend auf einem Zyklus bestimmt wird, in dem die zweite Vorrichtung (101) das erste Paket sendet, wobei der Zyklus einem Zyklenwert entspricht, der eine ganze Zahl ist, die basierend auf einem Takt der zweiten Vorrichtung (101) initialisiert und jedes Mal, wenn eine feste Zeitperiode verstrichen ist, um eine andere ganze Zahl inkrementiert wird,

Bestimmen (S220), durch die erste Vorrichtung (102), basierend auf der ersten Kennzeichnung und einem zweiten Zyklus der ersten Vorrichtung, ob das erste Paket ein normales Paket ist, wobei bestimmt wird, dass das erste Paket normal ist, wenn die Latenz seiner Übertragung von der zweiten Vorrichtung (101) zur ersten Vorrichtung (102) innerhalb eines spezifischen Bereichs ist, wie basierend auf der ersten Kennzeichnung und dem zweiten Zyklus bestimmt, wobei der zweite Zyklus ein Zyklus ist, in dem die erste Vorrichtung (102) das erste Paket empfängt, oder ein Zyklus nach einem Zyklus, in dem die erste Vorrichtung (102) das erste Paket empfängt, und vor einem ersten Zyklus ist;

bei Bestimmen, dass das erste Paket ein normales Paket ist, Bestimmen (S230), durch die erste Vorrichtung (102), eines zweiten Pakets basierend auf dem ersten Paket, wobei das zweite Paket eine zweite Kennzeichnung trägt, und

Senden (S240), durch die erste Vorrichtung (102), des zweiten Pakets an eine dritte Vorrichtung (103) im ersten Zyklus, wobei die zweite Kennzeichnung basierend auf dem ersten Zyklus bestimmt wird.

2. Verfahren nach Anspruch 1, wobei der durch die erste Kennzeichnung angezeigte Zyklenwert der Zyklus ist, in dem die zweite Vorrichtung (101) das erste Paket sendet, und

wobei das Bestimmen (S220), durch die erste Vorrichtung (102) basierend auf der ersten Kennzeichnung und einem zweiten Zyklus der ersten Vorrichtung (102), ob das erste Paket ein normales Paket ist, Folgendes umfasst:

Bestimmen, durch die erste Vorrichtung (102), ob der durch die erste Kennzeichnung angezeigte Zyklenwert innerhalb eines ersten Fensters ist, wobei das erste Fenster entsprechend dem zweiten Zyklus aktualisiert wird, wobei unterschiedliche Zyklen der ersten Vorrichtung (102) unterschiedlichen ersten Fenstern entsprechen; und wenn der durch die erste Kennzeichnung angezeigte Zyklenwert innerhalb des ersten Fensters ist, Bestimmen, durch die erste Vorrichtung (102), dass das erste Paket ein normales Paket ist; oder wenn der durch die erste Kennzeichnung angezeigte Zyklenwert nicht innerhalb des ersten Fensters ist, Bestimmen, durch die erste Vorrichtung (102), dass das erste Paket ein anomales Paket ist.

**3.** Verfahren nach Anspruch 1, wobei ein durch die zweite Kennzeichnung angezeigter Zyklenwert der erste Zyklus ist; und
wobei das Bestimmen (S220), durch die erste Vorrichtung (102) basierend auf der ersten Kennzeichnung und einem zweiten Zyklus der ersten Vorrichtung (102), ob das erste Paket ein normales Paket ist, Folgendes umfasst:

Bestimmen, durch die erste Vorrichtung (102), der zweiten Kennzeichnung basierend auf der ersten Kennzeichnung;
Bestimmen, durch die erste Vorrichtung (102), ob der durch die zweite Kennzeichnung angezeigte Zyklenwert innerhalb eines zweiten Fensters ist, wobei das zweite Fenster entsprechend dem zweiten Zyklus aktualisiert wird, wobei unterschiedliche Zyklen der ersten Vorrichtung (102) unterschiedlichen zweiten Fenstern entsprechen; und
wenn der durch die zweite Kennzeichnung angezeigte Zyklenwert innerhalb des zweiten Fensters ist, Bestimmen, durch die erste Vorrichtung (102), dass das erste Paket ein normales Paket ist; oder wenn der durch die zweite Kennzeichnung angezeigte Zyklenwert nicht innerhalb des zweiten Fensters ist, Bestimmen, durch die erste Vorrichtung (102), dass das erste Paket ein anomales Paket ist.

**4.** Verfahren nach Anspruch 2, wobei das erste Fenster $[C_1 - \Delta + S, C_1 + (w - 1) * S - \Delta]$ ist, wobei $\Delta$ einen Anpassungswert entsprechend der zweiten Vorrichtung (101) repräsentiert, und wobei der Anpassungswert eine ganze Zahl ist und verwendet wird zum Bestimmen der zweiten Kennzeichnung; wobei $C_1$ eine ganze Zahl ist, die den zweiten Zyklus repräsentiert; $w \geq 3$, und $w$ eine ganze Zahl repräsentiert; und $S$ eine ganze Zahl ungleich Null repräsentiert.

**5.** Verfahren nach Anspruch 3, wobei das zweite Fenster $[C_1 + S, C_1 + (w - 1) * S]$ ist, wobei $C_1$ eine ganze Zahl ist, die den zweiten Zyklus repräsentiert; $w \geq 3$, und $w$ eine ganze Zahl repräsentiert; und $S$ die andere ganze Zahl ungleich Null repräsentiert.

**6.** Verfahren nach einem der Ansprüche 1 bis 5, wobei das Verfahren ferner Folgendes umfasst:

bei Bestimmen, dass das erste Paket ein anomales Paket ist, Durchführen, durch die erste Vorrichtung (102), von Anomalitätsbehandlung auf dem ersten Paket, wobei die Anomalitätsbehandlung Verwerfen des ersten Pakets oder Durchführen einer erneuten Planungsverarbeitung auf dem ersten Paket umfasst.

**7.** Verfahren nach Anspruch 4, wobei die zweite Kennzeichnung basierend auf der ersten Kennzeichnung und dem Anpassungswert entsprechend der zweiten Vorrichtung (101) bestimmt wird.

**8.** Verfahren nach Anspruch 7, wobei das Verfahren ferner Folgendes umfasst:
Aktualisieren, durch die erste Vorrichtung (102), des Anpassungswerts, wenn der Zyklenwert des Zyklus der ersten Vorrichtung (102) zu einem maximalen Wert oder zu einem minimalen Wert springt.

**9.** Verfahren nach Anspruch 7 oder 8, wobei das Verfahren ferner Folgendes umfasst:

Empfangen, durch die erste Vorrichtung (102), einer Aktualisierungsnachricht, wobei die Aktualisierungsnachricht gesendet wird, wenn der Zyklenwert des Zyklus der zweiten Vorrichtung (101) zu einem maximalen Wert oder zu einem minimalen Wert springt; und
Aktualisieren, durch die erste Vorrichtung (102), des Anpassungswerts basierend auf der Aktualisierungsnachricht.

**10.** Paketverarbeitungseinrichtung (400), die Folgendes umfasst:

ein Empfangsmodul (410), ausgelegt zum Empfangen eines durch eine zweite Vorrichtung (101) gesendeten ersten Pakets, wobei das erste Paket eine erste Kennzeichnung trägt, und wobei die erste Kennzeichnung basierend auf einem Zyklus bestimmt wird, in dem die zweite Vorrichtung (101) das erste Paket sendet, wobei der Zyklus einem Zyklenwert entspricht, der eine ganze Zahl ist, die basierend auf einem Takt der zweiten Vorrichtung (101) initialisiert und jedes Mal, wenn eine feste Zeitperiode verstrichen ist, um eine andere ganze Zahl inkrementiert wird,
ein Verarbeitungsmodul (420), ausgelegt zum Bestimmen, basierend auf der ersten Kennzeichnung und einem zweiten Zyklus der Paketverarbeitungseinrichtung (400), ob das erste Paket ein normales Paket ist, wobei bestimmt wird, dass das erste Paket normal ist, wenn die Latenz seiner Übertragung von der zweiten Vorrichtung (101) zur Paketverarbeitungseinrichtung innerhalb eines spezifischen Bereichs ist, wie basierend auf der ersten Kennzeichnung und dem zweiten Zyklus bestimmt,

wobei der zweite Zyklus ein Zyklus ist, in dem die Paketverarbeitungseinrichtung (400) das erste Paket empfängt, oder ein Zyklus nach einem Zyklus, in dem die Einrichtung (400) das erste Paket empfängt, und vor einem ersten Zyklus ist; wobei das Verarbeitungsmodul (420) ferner ausgelegt ist zum: wenn das erste Paket ein normales Paket ist, Bestimmen eines zweiten Pakets basierend auf dem ersten Paket, wobei das zweite Paket eine zweite Kennzeichnung trägt, und

ein Sendemodul (430), ausgelegt zum Senden des zweiten Pakets an eine dritte Vorrichtung (103) im ersten Zyklus, wobei die zweite Kennzeichnung basierend auf dem ersten Zyklus bestimmt wird.

11. Einrichtung (400) nach Anspruch 10, wobei der durch die erste Kennzeichnung angezeigte Zyklenwert der Zyklus ist, in dem die zweite Vorrichtung (101) das erste Paket sendet, und
das Verarbeitungsmodul (420) spezifisch ausgelegt ist zum:

Bestimmen, ob der durch die erste Kennzeichnung angezeigte Zyklenwert innerhalb eines ersten Fensters ist, wobei das erste Fenster entsprechend dem zweiten Zyklus aktualisiert wird, wobei unterschiedliche Zyklen der Einrichtung (400) unterschiedlichen ersten Fenstern entsprechen; und
wenn der durch die erste Kennzeichnung angezeigte Zyklenwert innerhalb des ersten Fensters ist, Bestimmen, dass das erste Paket ein normales Paket ist; oder wenn der durch die erste Kennzeichnung angezeigte Zyklenwert nicht innerhalb des ersten Fensters ist, Bestimmen, dass das erste Paket ein anomales Paket ist.

12. Einrichtung (400) nach Anspruch 10, wobei ein durch die zweite Kennzeichnung angezeigter Zyklenwert der erste Zyklus ist; und
das Verarbeitungsmodul (420) spezifisch ausgelegt ist zum:

Bestimmen der zweiten Kennzeichnung basierend auf der ersten Kennzeichnung;
Bestimmen, ob der durch die zweite Kennzeichnung angezeigte Zyklenwert innerhalb eines zweiten Fensters ist, wobei das zweite Fenster entsprechend dem zweiten Zyklus aktualisiert wird, wobei unterschiedliche Zyklen der Einrichtung (400) unterschiedlichen zweiten Fenstern entsprechen; und
wenn der durch die zweite Kennzeichnung angezeigte Zyklenwert innerhalb des zweiten Fensters ist, Bestimmen, dass das erste Paket ein normales Paket ist; oder wenn der durch die zweite Kennzeichnung angezeigte Zyklenwert nicht innerhalb des ersten Fensters ist, Bestimmen, dass das erste Paket ein anomales Paket ist.

13. Einrichtung (400) nach Anspruch 11, wobei das erste Fenster $[C_1 - \Delta + S, C_1 + (w - 1) * S - \Delta]$ ist, wobei $\Delta$ einen Anpassungswert entsprechend der zweiten Vorrichtung (101) repräsentiert, und wobei der Anpassungswert eine ganze Zahl ist und verwendet wird zum Bestimmen der zweiten Kennzeichnung; wobei $C_1$ eine ganze Zahl ist, die den zweiten Zyklus repräsentiert; $w \geq 3$, und $w$ eine ganze Zahl repräsentiert; und $S$ die andere ganze Zahl ungleich Null repräsentiert.

## Revendications

1. Procédé de traitement de paquets, comprenant :

la réception (S210), par un premier dispositif (102), d'un premier paquet envoyé par un deuxième dispositif (101), le premier paquet portant une première étiquette, et la première étiquette étant déterminée sur la base d'un cycle au cours duquel le deuxième dispositif (101) envoie le premier paquet, le cycle correspondant à une valeur de cycle qui est un nombre entier initialisé sur la base d'une horloge du deuxième dispositif (101) et incrémenté d'un autre nombre entier chaque fois qu'une période de temps fixe s'est écoulée ;
la détermination (S220), par le premier dispositif (102) sur la base de la première étiquette et d'un deuxième cycle du premier dispositif, si le premier paquet est un paquet normal, le premier paquet étant déterminé comme normal lorsque la latence de sa transmission du deuxième dispositif (101) au premier dispositif (102) est comprise dans une plage spécifique déterminée sur la base de la première étiquette et du deuxième cycle, le deuxième cycle étant un cycle au cours duquel le premier dispositif (102) reçoit le premier paquet, ou étant un cycle après un cycle au cours duquel le premier dispositif (102) reçoit le premier paquet et avant un premier cycle ; s'il est déterminé que le premier paquet est un paquet normal, la détermination (S230), par le premier dispositif (102), d'un deuxième paquet basé sur le premier paquet, le deuxième paquet portant une deuxième étiquette ; et
l'envoi (S240), par le premier dispositif (102), du deuxième paquet à un troisième dispositif (103) dans le premier cycle, la deuxième étiquette étant déterminée sur la base du premier cycle.

**2.** Procédé selon la revendication 1, la valeur de cycle indiquée par la première étiquette étant le cycle au cours duquel le deuxième dispositif (101) envoie le premier paquet ; et
la détermination (S220), par le premier dispositif (102) sur la base de la première étiquette et d'un deuxième cycle du premier dispositif (102), si le premier paquet est un paquet normal comprenant :

la détermination, par le premier dispositif (102), si la valeur de cycle indiquée par la première étiquette est comprise dans une première fenêtre, la première fenêtre étant mise à jour en fonction du deuxième cycle, les différents cycles du premier dispositif (102) correspondant à des premières fenêtres différentes ; et.
si la valeur de cycle indiquée par la première étiquette est comprise dans la première fenêtre, la détermination, par le premier dispositif (102), que le premier paquet est un paquet normal ; ou si la valeur de cycle indiquée par la première étiquette n'est pas comprise dans la première fenêtre, la détermination, par le premier dispositif (102), que le premier paquet est un paquet anormal.

**3.** Procédé selon la revendication 1, une valeur de cycle indiquée par la deuxième étiquette étant le premier cycle ; et
la détermination (S220), par le premier dispositif (102) sur la base de la première étiquette et d'un deuxième cycle du premier dispositif (102), que le premier paquet est un paquet normal comprenant :

la détermination, par le premier dispositif (102), de la deuxième étiquette sur la base de la première étiquette ;
la détermination, par le premier dispositif (102), si la valeur de cycle indiquée par la deuxième étiquette est comprise dans une deuxième fenêtre, la deuxième fenêtre étant mise à jour en fonction du deuxième cycle, différents cycles du premier dispositif (102) correspondant à différentes deuxièmes fenêtres ; et
si la valeur de cycle indiquée par la deuxième étiquette est comprise dans la deuxième fenêtre, la détermination, par le premier dispositif (102), que le premier paquet est un paquet normal ; ou si la valeur de cycle indiquée par la deuxième étiquette n'est pas comprise dans la deuxième fenêtre, la détermination, par le premier dispositif (102), que le premier paquet est un paquet anormal.

**4.** Procédé selon la revendication 2, la première fenêtre étant $[C_1 - \Delta + S, C_1 + (w - 1) * S - \Delta]$, $\Delta$ représentant une valeur d'ajustement correspondant au deuxième dispositif (101), et la valeur d'ajustement étant un nombre entier et étant utilisée pour déterminer la deuxième étiquette ; $C_1$ étant un nombre entier qui représente le deuxième cycle ; $w \geq 3$, et w représentant un nombre entier ; et S représentant un nombre entier qui n'est pas nul.

**5.** Procédé selon la revendication 3, la deuxième fenêtre étant $[C_1 + S, C_1 + (w - 1) * S]$, $C_1$ étant un nombre entier qui représente le deuxième cycle ; $w \geq 3$, et w représentant un nombre entier ; et S représentant l'autre nombre entier qui n'est pas nul.

**6.** Procédé selon l'une quelconque des revendications 1 à 5, le procédé comprenant en outre :
s'il est déterminé que le premier paquet est un paquet anormal, la réalisation, par le premier dispositif (102), d'un traitement d'anomalie sur le premier paquet, le traitement d'anomalie comprenant le rejet du premier paquet ou la réalisation d'un traitement de réordonnancement sur le premier paquet.

**7.** Procédé selon la revendication 4, la deuxième étiquette étant déterminée sur la base de la première étiquette et de la valeur d'ajustement correspondant au deuxième dispositif (101).

**8.** Procédé selon la revendication 7, le procédé comprenant en outre :
la mise à jour, par le premier dispositif (102), de la valeur d'ajustement lorsque la valeur de cycle du cycle du premier dispositif (102) saute à une valeur maximale ou à une valeur minimale.

**9.** Procédé selon la revendication 7 ou 8, le procédé comprenant en outre :

la réception, par le premier dispositif (102), d'un message de mise à jour, le message de mise à jour étant envoyé lorsque la valeur de cycle du cycle du deuxième dispositif (101) saute à une valeur maximale ou à une valeur minimale ; et.
la mise à jour, par le premier dispositif (102), de la valeur d'ajustement sur la base du message de mise à jour.

**10.** Appareil de traitement de paquets (400), comprenant :

un module de réception (410), configuré pour recevoir un premier paquet envoyé par un deuxième dispositif (101), le premier paquet portant une première étiquette, et la première étiquette étant déterminée sur la base d'un cycle au cours duquel le deuxième dispositif (101) envoie le premier paquet, le cycle correspondant à une valeur de cycle qui est un nombre entier initialisé sur la base d'une horloge du deuxième dispositif (101) et incrémenté d'un autre nombre entier chaque fois qu'une période de temps fixe s'est écoulée ;

un module de traitement (420), configuré pour déterminer, sur la base de la première étiquette et d'un deuxième cycle de l'appareil de traitement de paquets (400), si le premier paquet est un paquet normal, le premier paquet étant considéré comme normal lorsque la latence de sa transmission du deuxième dispositif (101) à l'appareil de traitement de paquets se situe dans une plage spécifique déterminée sur la base de la première étiquette et du deuxième cycle,

le deuxième cycle étant un cycle au cours duquel l'appareil de traitement de paquets (400) reçoit le premier paquet, ou étant un cycle après un cycle au cours duquel l'appareil (400) reçoit le premier paquet et avant un premier cycle ;

le module de traitement (420) étant en outre configuré pour : si le premier paquet est un paquet normal, déterminer un deuxième paquet sur la base du premier paquet, le deuxième paquet portant une deuxième étiquette ; et

un module d'envoi (430), configuré pour envoyer le deuxième paquet à un troisième dispositif (103) dans le premier cycle, la deuxième étiquette étant déterminée sur la base du premier cycle.

11. Appareil (400) selon la revendication 10, la valeur de cycle indiquée par la première étiquette étant le cycle au cours duquel le deuxième dispositif (101) envoie le premier paquet ; et

le module de traitement (420) étant spécifiquement configuré pour :

déterminer si la valeur de cycle indiquée par la première étiquette est comprise dans une première fenêtre, la première fenêtre étant mise à jour en fonction du deuxième cycle, différents cycles de l'appareil (400) correspondant à des premières fenêtres différentes ; et

si la valeur de cycle indiquée par la première étiquette est comprise dans la première fenêtre, déterminer que le premier paquet est un paquet normal ; ou si la valeur de cycle indiquée par la première étiquette n'est pas comprise dans la première fenêtre, déterminer que le premier paquet est un paquet anormal.

12. Appareil (400) selon la revendication 10, une valeur de cycle indiquée par la deuxième étiquette étant le premier cycle ; et

le module de traitement (420) étant spécifiquement configuré pour :

déterminer la deuxième étiquette sur la base de la première étiquette ;

déterminer si la valeur de cycle indiquée par la deuxième étiquette est comprise dans une deuxième fenêtre, la deuxième fenêtre étant mise à jour en fonction du deuxième cycle, différents cycles de l'appareil (400) correspondant à des deuxièmes fenêtres différentes ; et

si la valeur de cycle indiquée par la deuxième étiquette est comprise dans la deuxième fenêtre, déterminer que le premier paquet est un paquet normal ; ou si la valeur de cycle indiquée par la deuxième étiquette n'est pas comprise dans la première fenêtre, déterminer que le premier paquet est un paquet anormal.

13. Appareil (400) selon la revendication 11, la première fenêtre étant $[C_1 - \Delta + S, C_1 + (w - 1) * S - \Delta]$, $\Delta$ représentant une valeur d'ajustement correspondant au deuxième dispositif (101), et la valeur d'ajustement étant un nombre entier utilisé pour déterminer la deuxième étiquette ; $C_1$ étant un nombre entier qui représente le deuxième cycle ; $w \geq 3$, et w représentant un nombre entier ; et S représentant l'autre nombre entier qui n'est pas nul.

Queue $Q_X$

FIG. 1

FIG. 2

| Interface | Adjustment value |
|-----------|------------------|
| 11 | −4 → 11 |

| Interface | Adjustment value |
|-----------|------------------|
| 21 | 6 → −9 |
| 22 | 8 → −7 |

| Interface | Adjustment value |
|-----------|------------------|
| 31 | −2 → 13 |

11      21      22      31

Second device      First device      Third device

FIG. 3

Packet processing
apparatus 400

Receiving module 410

Processing module 420

Sending module 430

FIG. 4

Packet processing apparatus 500

Processor
510

Memory
530

Transceiver
520

FIG. 5

**EP 3 902 217 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7171683 B2
- US 20020129158 A1